# EUROPEAN PATENT APPLICATION

(11) **EP 3 043 163 A1**
(43) Date of publication of application: **13.07.2016**
(21) Application number: 16150539.1
(22) Date of filing: 08.01.2016
(51) Int. Cl.: G01M 3/00, G01M 3/38, G01M 3/20, G01N 21/3504, H02K 11/20

(54) **ON-DECK METHOD AND SYSTEM FOR VALIDATING GENERATOR SEALING ASSEMBLY**

(30) Priority: 09.01.2015 US 201514593206
(71) Applicant: General Electric Company, Schenectady, NY 12345 (US)
(72) Inventor: XU, James Jun, Schenectady, NY New York 12345 (US); YIN, Weijun, Niskayuna, NY New York 12309 (US); BJORKLUND, Marlowe Cameron, Daphne, AL Alabama 36526 (US)
(74) Representative: Fischer, Jens Peter

(57) **Abstract**

An on-deck system 300 for non-destructively validating a machine part is provided. The machine part 30 is configured for use with a dynamoelectric machine or a turbomachine. The system includes a portable and hand-held infrared transceiver 310 configured to emit and receive infrared light, and a bandpass filter 320 configured to filter the infrared light. A crystal probe 340 is configured to contact the machine part, and one or more mirrors 330 are configured to direct the infrared light onto the crystal probe and subsequently back to the infrared transceiver/detector. The infrared transceiver is adapted to communicate with a notification device configured to output a notification of a test result.

## Description

### BACKGROUND OF THE INVENTION

The subject matter disclosed herein generally relates to validation of parts and more particularly to the on-site or on-deck validation and verification of parts used in dynamoelectric machines and turbomachines.

Large generators are typically cooled with a light density gas. Hydrogen (H₂) has been widely used as a coolant due to its desirable thermophysical properties including low windage friction, high heat dissipation capability and high resistance to corona discharge when compared to other cooling gas options. Additionally, H₂ has the advantage of being readily accessible and inexpensive.

Leakage of H₂ may prevent the generator from operating efficiently, and in some cases may create power generation outages. Among possible areas of H₂ leakage around a generator, are flanged joints on the stator casing including high voltage bushings, seal plates, o-rings, gaskets and pipe flanges. Leaks may also occur around the interfaces of the cooler, welds, bolt heads and end shield. The bearing enclosure in the outer end shields, the rotor terminal packing, collector assembly as well as glands made for instrumentation wiring penetration may also be susceptible to leaks. Other air-tight transitions and welding joints may be sources of leaks, as well as the seal oil drain system, gas piping, and hydrogen cabinet. If the generator is a water cooled generator the stator liquid cooled windings also may be a source of leaks.

Modem dynamoelectric machines (e.g., motors and generators) and turbomachines (e.g., gas or steam turbines) use many parts, and these parts may be sourced from many different vendors or manufacturers. Parts are shipped to the turbine deck and placed in queue for their respective installation during manufacture or outage services. The parts are identified per their drawings, specification and part numbers. In theory, the potential for the wrong part to be introduced and used should be low, but in reality wrong parts are used. The sealing assembly in a generator is of particular concern as it consists of o-rings, gaskets and other non-metallic parts or components which prevent hydrogen gas leaks or hydraulic leaks. A visual inspection of the parts (e.g., by the naked eye) is often insufficient to determine if a specific part meets rigorous engineering criteria. For example, an o-ring made to OEM specifications may "look" and feel exactly like a poor quality and sub-standard o-ring. The specific materials and coatings for parts (like o-rings) are critical to their performance and hydrogen gas leak-prevention in highly engineered power equipment. For example, a sub-standard o-ring may fail in a year or two, while an o-ring made to OEM specifications will last 20 years or more. Both of these o-rings "look" and feel the same, but they perform quite differently (due to a difference in their constituent materials). Sub-standard o-rings will not perform satisfactorily at the high temperatures and/or pressures typically experienced in dynamo electric machines.

Existing destructive test methods can analyze the materials of the parts, but they permanently damage the part and render it unusable. To date, no rapid in-situ, on-site (or on-deck) non-destructive method and system are available for verifying and validating machine parts of interest, especially those for sealing assemblies in generators.

### BRIEF DESCRIPTION OF THE INVENTION

In accordance with one aspect of the invention, a system for non-destructively validating a machine part is provided. The machine part is configured for use with a dynamoelectric machine or a turbomachine. The system includes a portable and hand-held infrared transceiver configured to emit and receive infrared light, and a bandpass filter configured to filter the infrared light. A crystal probe is configured to contact the machine part, and one or more mirrors are configured to direct the infrared light onto the crystal probe and subsequently back to the infrared transceiver/detector. The infrared transceiver is adapted to communicate with a notification device configured to output a notification of a test result. The system may be used on-deck.

In another aspect, an on-deck, portable and hand-held system for validating a machine part is provided. The machine part is configured for use with a dynamoelectric machine or a turbomachine. The system includes an infrared transceiver configured to emit and receive infrared light, and the infrared transceiver is a deuterated triglycerine sulfate/potassium bromide (DTGS/KBr) type of transceiver/detector. A bandpass filter is configured to filter the infrared light. A crystal probe is configured to contact the machine part, and the crystal probe is comprised of one of, germanium, diamond, thallium bromoiodide (KRS-5), sodium chloride or zinc selenide. One or more mirrors are configured to direct the infrared light onto the crystal probe and subsequently back to the infrared transceiver. The infrared transceiver is adapted to communicate with a notification device configured to output a notification of a test result. The notification device is one of a display and the test result is indicated on the display, or the notification device is a speaker and the test result is emitted as an audible tone by the speaker. The system is configured to perform the non-destructive validation and provide the test result at or near the dynamoelectric machine or the turbomachine.

In yet another aspect, a method for non-destructively validating a machine part is provided. The machine part is configured for use with a dynamoelectric machine or a turbomachine. The method includes the step of scanning the machine part with an infrared spectrometer. The infrared spectrometer includes an infrared transceiver configured to emit and receive/detect infrared light. A crystal probe is configured to non-destructively contact the machine part. One or more mirrors are configured to direct the infrared light onto the crystal probe and subsequently back to the infrared transceiver. A filtering step filters the infrared light with a bandpass filter. A comparing step compares a spectrum of the infrared light with a reference spectrum. An outputting step outputs a notification of a test result on a notification device. The method is performed at or near the location of the dynamoelectric machine or the turbomachine. For example, the method may be performed on-deck or right at the machine location, for rapid and immediate test results.

### BRIEF DESCRIPTION OF THE DRAWINGS

Other features and advantages of the present invention will be apparent from the following more detailed description of the preferred embodiment, taken in conjunction with the accompanying drawings which illustrate, by way of example, the principles of certain aspects of the invention.
FIG. 1 illustrates a schematic view of a turbine and generator system.
FIG. 2 is a chart of the absorption spectrum of an in-specification fluoroelastomer and a sub-standard rubber product.
FIG. 3 is a schematic view of a system for validating a machine part, according to an aspect of the present invention.
FIG. 4 illustrates a flow chart of a method for validating a machine part, according to an aspect of the present invention.
FIG. 5 illustrates is a schematic of the notification device used for outputting a notification of a test result, according to an aspect of the present invention.
FIG. 6 illustrates an end view of a bandpass filter holder, according to an aspect of the present invention
FIG. 7 illustrates an end view of the collector end seal assembly of a hydrogen cooled generator.

### DETAILED DESCRIPTION OF THE INVENTION

Aspects of the present disclosure include a system and method for on-deck verification of machine parts by using a non-destructive, hand-held filtered infrared spectroscopic apparatus which is capable of scanning one spectral image in a short time with an attenuated total reflection probe.

Dynamoelectric machines consist of various non-metallic materials/components for either structure, or seals or electrical insulation purposes. On-site verification of some key components or subsystems is of particular value not only to the manufacturing shop floor, but to on-deck outage services where the parts, components, subsystems or assemblies are replaced. The non-metallic materials are mostly rigid thermosetting resin in nature, however fluoroelastomers are also used because they have excellent chemical and heat resistance and sealing capability, and because of this are specified for applications where these properties are required. One such fluoroelastomer is Viton® (a registered trademark of E. I. du Pont de Nemours and Company). These materials are used in the power generation industry as seals, o-rings, gaskets, and other components. Other materials useful in the power generation industry as seals are glass epoxy laminates (e.g., G-11) and nitrile. The properties of a particular fluorocarbon elastomer composition depend on several factors, and these include the monomers and curing agent used in their preparation. Because of the relationship between the formulation, properties and performance of these elastomers, it is important to ensure that a fluoroelastomer with the required formulation is used in a particular application. When a particular elastomer fails in-service or has to be replaced, it is also important to make certain that the correct elastomer (or material) was used and that the correct elastomer (or material) is used to replace the failed elastomer/material. To enable this, one embodiment of the invention is to provide a portable, hand-held infrared spectroscopic device for use as an on-site (on-deck) verification tool that can positively confirm fluoroelastomer (or other material) types before installation into the machine.

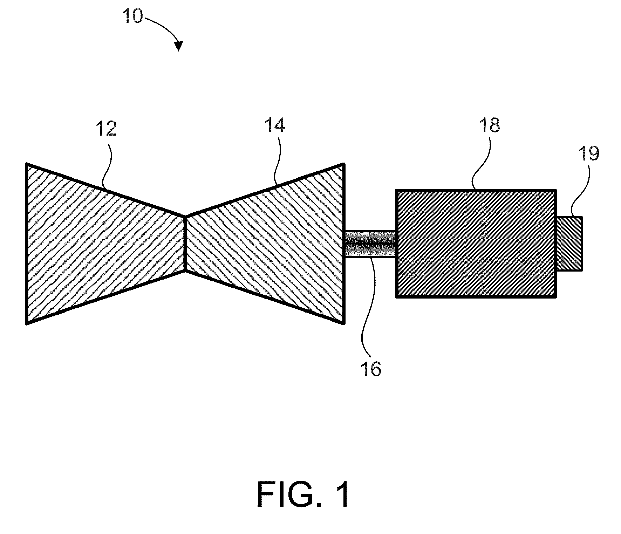

FIG. 1 illustrates a schematic view of a turbine and generator system. The gas turbine 10 includes a compressor 12 and a turbine section 14. The gas turbine 10 could also be replaced by a steam turbine. The turbine 10 is connected by a shaft 16 to a generator 18. In this example, the turbine 10 drives the generator 18. The generator 18 may be a hydrogen cooled generator, and accordingly the generator 18 would include a number of seals and sealing components to prevent hydrogen leaks. These seals and sealing assembly may include, but are not limited to, o-rings, gaskets and seal plates. A collector end of the generator has a collector 19 that typically includes a number of seal locations, and therefore a number of potential leak locations if the seal components fail.

In a utility scale generator, and especially a hydrogen cooled generator, the temperatures and pressures experienced by the machine demand high performance seal components. As examples only, sealing o-rings may be comprised of a fluoroelastomer such as Viton®, and seal plates may be comprised of glass-epoxy laminates such as G-11. Both of these materials have the physical properties to withstand the high temperatures and pressures of the generator 18. In addition, these materials will perform satisfactorily for extended periods of time (e.g., 20 to 30 years).

Unfortunately, in complex machines the components are often sourced from a variety of manufacturers and suppliers. This creates an opportunity for inferior parts to be snuck into the supply chain. One o-ring looks very much like another o-ring, even though the materials may be vastly different (at least from a performance standpoint). For example, a sub-standard o-ring looks the same (to the naked eye) as a Viton® o-ring. However, their material composition will be different, and their respective performance will be vastly different. A sub-standard o-ring (made of inexpensive rubber) may only function for a year or two before failing in a power generation application. The Viton® (or fluoroelastomer) o-ring will last for 10 to 20 years before needing replacement. The challenge is to identify sub-standard parts (and/or validate specification parts) before they are installed in the machine (e.g., generator 18). Preferably, this would be accomplished on-site (or on-deck) during machine construction or service, to minimize construction and service delays.

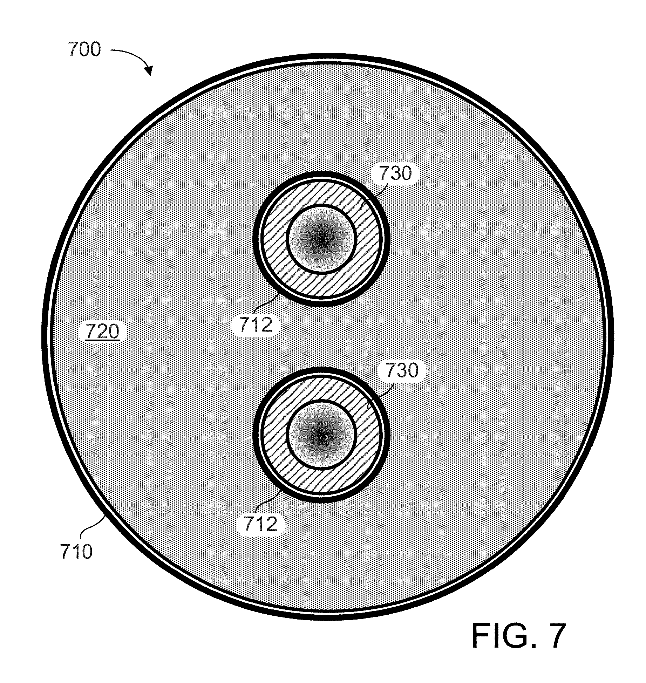

FIG. 7 illustrates an end view of the collector end seal assembly 700 in a hydrogen cooled generator. The seal assembly 700 may include one or more outer o-rings 710, inner o-rings 712, and a seal plate or gasket 720. Cooling pipes or conduits 730 extend through the sealing assembly. In some applications the o-rings 710, 712 are specified to be made of Viton® and the seal plate/gasket 720 is specified to be made of G-11. These are merely two examples and these parts may be made of other materials if desired in the specific application. If any of these parts fail, then hydrogen could leak out of the generator. If this happens in sufficient quantities a serious problem could occur, and at the very least the operator would be wasting hydrogen. An increased use of hydrogen would signal a leak and this would call for an outage, thereby taking the generator out of service (at least until the leak has been repaired).

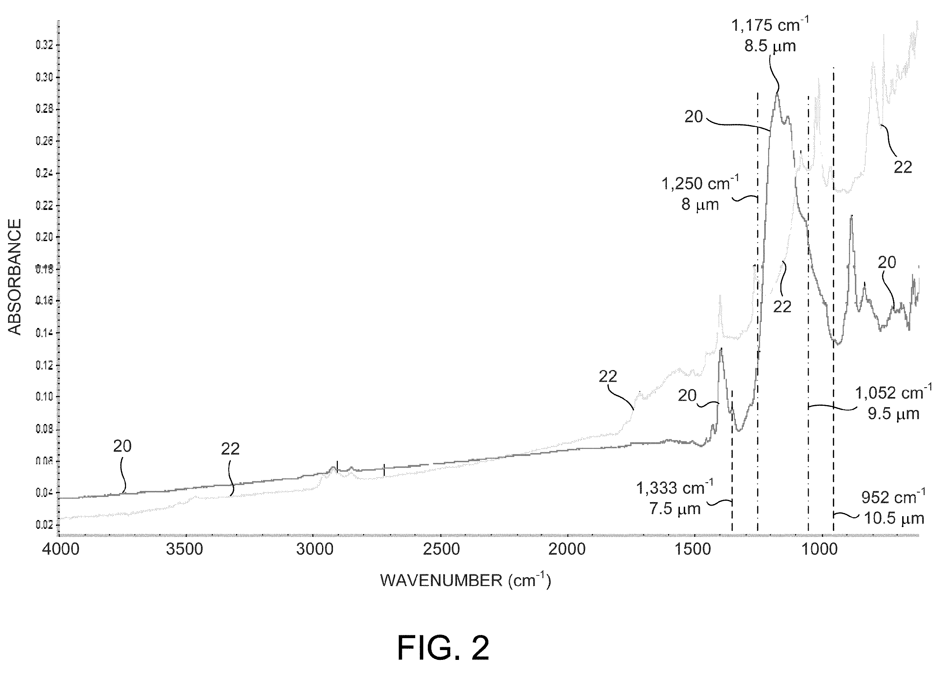

FIG. 2 is a chart of the absorption spectrum of a fluoroelastomer, such as Viton®, and a sub-standard rubber product. As can be seen from the chart, the Viton® spectrum 20 is somewhat similar to the rubber spectrum 22 in the wavenumber range of about 1,400 cm⁻¹ to 4,000 cm⁻¹ (or 2.5 µm to 7.1 µm). However, in the wavenumber range of about 952 cm⁻¹ to 1,333 cm⁻¹ (or 7.5 µm to 10.5 µm) there are distinct differences in the absorbance peaks of the two spectrums. The Viton® spectrum 20 has a distinct peak at about 1,175 cm⁻¹ (or 8.5 µm). The rubber spectrum 22 has a distinct peak at about 1,000 cm⁻¹ (or 10 µm). These two spectrums can be compared to differentiate between the two products. The Viton® spectrum 20 may also be stored as a reference and used in subsequent tests to validate or verify test subjects (e.g., to verify if an unknown o-ring is comprised of Viton® or an undesired inferior product).

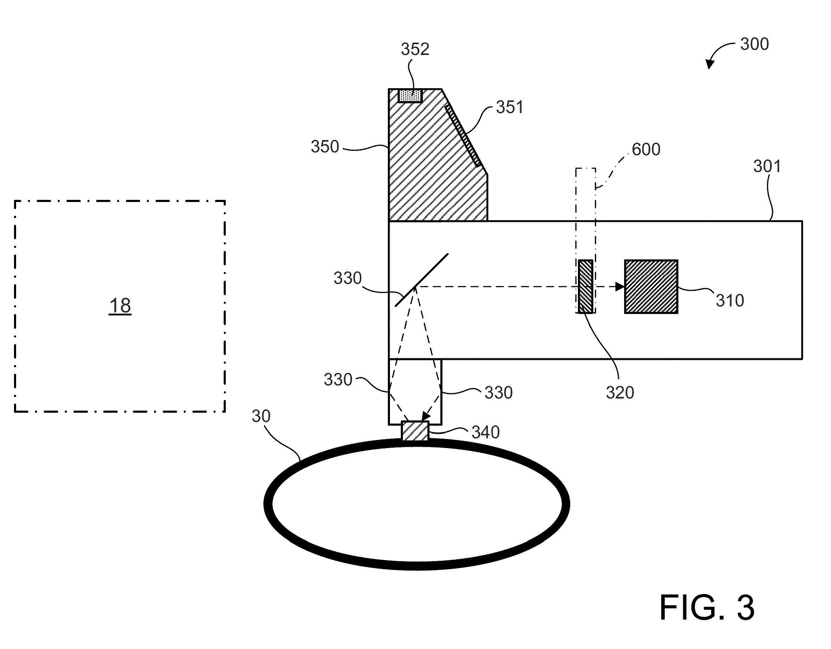

FIG. 3 is a schematic view of a system 300 for validating a machine part, according to an aspect of the present invention. The machine part 30 (e.g., an o-ring) is to be tested to determine if it is a valid (in specification) part or a non-valid (out of specification) part. In this example, the o-ring should be made of a Viton® material, and this material has an absorption spectrum according to line 20 in FIG. 2. An out of specification (or non-Viton®) part might have an absorbance spectrum similar to line 22 in FIG. 2. The system 300 may take the form of a portable and/or handheld infrared spectroscopic scanner, which may be an attenuated total reflectance (ATR) type spectrometer. A main body 301 may house an infrared transceiver 310 that is configured to emit and receive infrared light. The infrared transceiver/detector 310 may be an uncooled deuterated triglycerine sulfate/potassium bromide (DTGS/KBr) type of infrared detector/transmitter with an infrared laser accessory, or any other suitable middle/medium infrared wavelength (e.g., 2.5 µm to 25 µm) infrared device.

One or more mirrors 330 are configured to direct the infrared light onto a crystal probe 340. For example, the crystal probe 340 may be a diamond probe which can contact the to-be-installed part 30 without damaging either the probe 340 or the part 30. The infrared light will reflect one or more times and then exit the probe 340. The infrared light is then directed back to the transceiver 310 by mirrors 330. The infrared light received is transformed into a signal (or spectrum or spectral image/ pattern) that can be compared to a reference standard. The spectrum or resultant spectral image is sent to a notification device 350. The time the probe 340 is in contact with part 30 may be about one second to about 16 seconds, or any other suitable time. The contact area may be about 1 mm to about 5 mm (0.04 inch to 0.2 inch diameter), or any other suitable contact area. The contacting surface of the parts can be "as is" or, the contact area may be wiped with a cleaning agent (e.g., isopropyl alcohol) to remove possible silicone oil or other preserving oils/agents which may be on the parts. The system may be used and the test performed at or near the location of the generator 18. This will enable parts to be validated (on-site or on-deck) as they are being installed.

To further differentiate the received spectrums of test samples a bandpass filter 320 may be placed in the optical path so that the infrared light passes through the filter 320. The bandpass filter 320 can be mounted in a holder 600, and the holder 600 may contain multiple filters 610, 620, 630, 640 with different bandpass ranges. For a carousel type holder a clock-wise turn will select the next bandpass filter for specific parts. The bandpass filter 320 may be mounted at any suitable location in or on the main body 301, as long as the infrared light passes through the filter 320.

The bandpass filter(s) 320 may have a spectral range or response of about 952 cm⁻¹ to about 1,333 cm⁻¹ (or 7.5 µm to 10.5 µm), or between about 1,052 cm⁻¹ and about 1,250 cm⁻¹ or (8 µm to 9.5 µm), or between about 1,149 cm⁻¹ to about 1,219 cm⁻¹ (8.2 µm and 8.7 µm) which is a sole characteristic infrared absorption band for a Viton® seal. It is to be understood that filters 320 with other bandpass ranges can be used, and mounted as needed to identify the most characteristic infrared absorption band of any other material to be identified/validated.

The bandpass filter 320 eliminates interference from other commonly present materials or molecules by focusing on the high contrast (or intensity) signal of the Viton® spectrum 20. The example shown and discussed describes Viton® and rubber, but any desired and suitable material can be analyzed, such as glass epoxy laminates (e.g., G-11), nitrile, or any other specific material to be used as a main component in components, parts, assemblies, or subsystems for dynamoelectric machines or turbomachines.

The notification device 350 may take the form of a special or general purpose digital computer, such as a miniaturized personal computer (PC; IBM-compatible, Apple-compatible, Android or otherwise), laptop, netbook, tablet, smartphone, workstation, minicomputer, or any other suitable computer or display device. The notification device 350 may receive image data from the transceiver 310 and display/indicate the result in real time, or near real time, on a display 351. A text message (or image or video or alarm) or signal could be sent to a smartphone, tablet or computer indicating a valid or invalid part. The test result could be displayed as a PASS/FAIL, GO/NO GO, or other suitable result. A test or verification result signal could also be sent to a remote or local monitoring site. The notification device 350 may also display a warning or notification about the verification or test result. The test result may be an audible tone or vibratory signal (e.g., a beep, buzz or siren) output/emitted from a speaker 352 associated with the notification device 350. For example, a PASS result could be signified by a beep, while a FAIL result could be signified by a double buzz or different audio tone. As another example, the notification device 350 could be a display that displays "PASS" when a Viton® o-ring is detected, and a "FAIL" when a non-Viton® or rubber o-ring is detected.

Attenuated total reflection (ATR) is a sampling technique used in conjunction with infrared spectroscopy which enables samples to be examined directly in the solid state. Infrared light undergoes multiple internal reflections in the crystal probe 340 of high refractive index upon contacting the parts, components or assemblies to be installed. The machine part 30 is in contact with the crystal probe 340. A beam of light is passed through the crystal probe 340 in such a way that it reflects at least once off the internal surface in contact with the machine part 30. This reflection forms an evanescent wave which extends into the machine part 30. The penetration depth into the machine part 30 may be between 0.5 and 10, with the exact value being determined by the wavelength of light, the angle of incidence and the indices of refraction for the crystal probe 340 and the medium being probed, and the contact with the part currently being tested. The number of reflections may be varied by varying the angle of incidence. The infrared beam is then collected by the detector 310 after it exits the crystal probe 340. This evanescent effect only works if the crystal is made of an optical material with a higher refractive index than the sample being studied. Otherwise light is lost to the sample. In the case of a solid machine part, the machine part 30 is pressed into direct contact with the crystal probe 340. The crystal probe 340 may be comprised of one of, germanium, diamond, thallium bromoiodide, sodium chloride or zinc selenide. The excellent mechanical properties of diamond make it an ideal material for an ATR crystal probe, however its cost may be higher than germanium. For fluoroelastomers, a diamond or germanium probe 340 would be recommended. The shape of the crystal probe 340 depends on the type of spectrometer and nature of the sample. With dispersive spectrometers, the crystal probe may be a rectangular slab with chamfered edges. However, the crystal probe 330 may also have geometries comprised of prisms, cylinders, half-spheres, or thin sheets.

The system 300 may take the form of a handheld or portable infrared spectrometer. This infrared spectrometer may be connected to the notification device 350 by a wired or wireless link. A wired link may be a USB connection, serial or parallel connectors/cables, video cable or any other suitable wired connection. A wireless link may include a bluetooth, wifi, radio frequency, or any other suitable wireless communication system/interface.

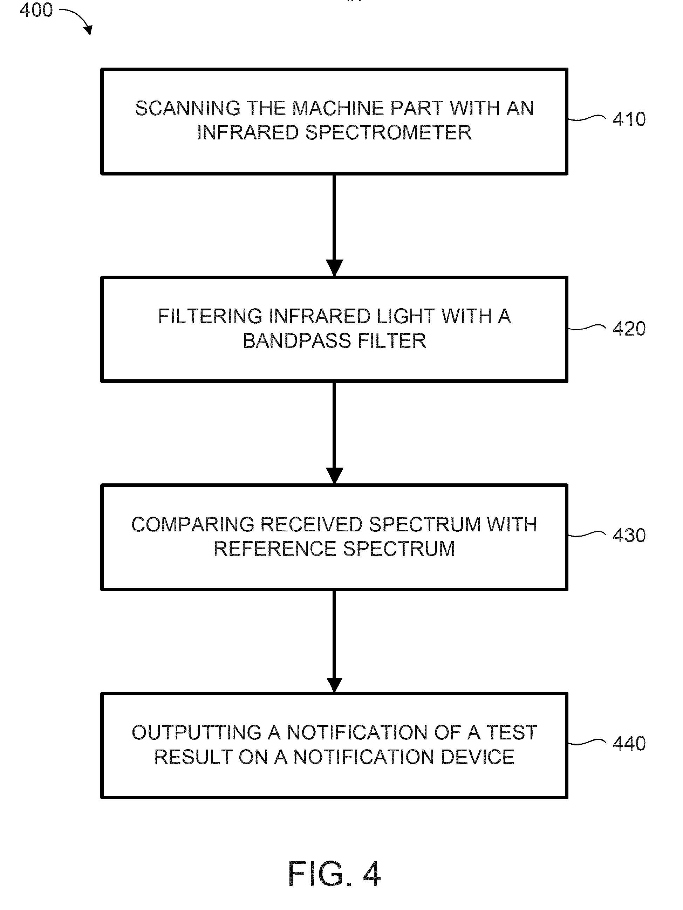

FIG. 4 illustrates a flow chart of a method 400 for on-site or on-deck validation of a machine part, according to an aspect of the present invention. The machine part may be used with a dynamoelectric machine or a turbomachine, or any other suitable machine. For example, the machine part may be an o-ring, a gasket or a seal plate. The method 400 includes the steps of scanning 410 the machine part 30 with a portable/hand-held infrared spectrometer 300. The portable and/or hand-held infrared spectrometer 300 includes an infrared transceiver 310 configured to emit and receive infrared light. The infrared transceiver 310 may be a deuterated triglycerine sulfate/potassium bromide (DTGS/KBr) type of transceiver. A crystal probe 340 is configured to contact the machine part 30. The crystal probe 340 may be comprised of germanium, diamond, thallium bromoiodide, sodium chloride or zinc selenide. A germanium or diamond probe is preferred, but the other types will work as well, depending on the application. One or more mirrors 330 are configured to direct the infrared light onto the crystal probe 340 and subsequently back to the infrared transceiver 310.

A filtering step 420 filters the infrared light with a bandpass filter 320. The filtering step 420 may include filtering the radiation with the bandpass filter that has a spectral response between about 952 cm⁻¹ (10.5 µm) to about 1,333 cm⁻¹ (7.5 µm), or about 1,052 cm⁻¹ (9.5 µm) to about 1,250 cm⁻¹ (8 µm), or about 8.2 µm (1,219 cm⁻¹) to about 8.7 µm (1,149 cm⁻¹). A comparing step 430 compares a spectrum of the received infrared light with a reference spectrum. A match between the two spectrums results in a positive test result (e.g., PASS or GO), and a non-match results in a negative test result (e.g., FAIL, NO-GO). In the Viton® example, the reference spectrum would be the spectrum for an authentic Viton® part, and this would be used when scanning/testing for parts that should be made of Viton®. An outputting step 440 outputs a notification of a test result on a notification device. The notification device may be a display, and the test result would be indicated on the display, or the notification device might be a speaker and the test result would be emitted as an audible tone by the speaker. The method 400 may be performed at or near the location of the dynamoelectric machine or the turbomachine. This will enable parts to be validated as they are being installed, and result in faster repairs, service and construction. Additionally, unexpected machine outages will be reduced (as the correct parts will be installed), thereby making power generation more economical and efficient.

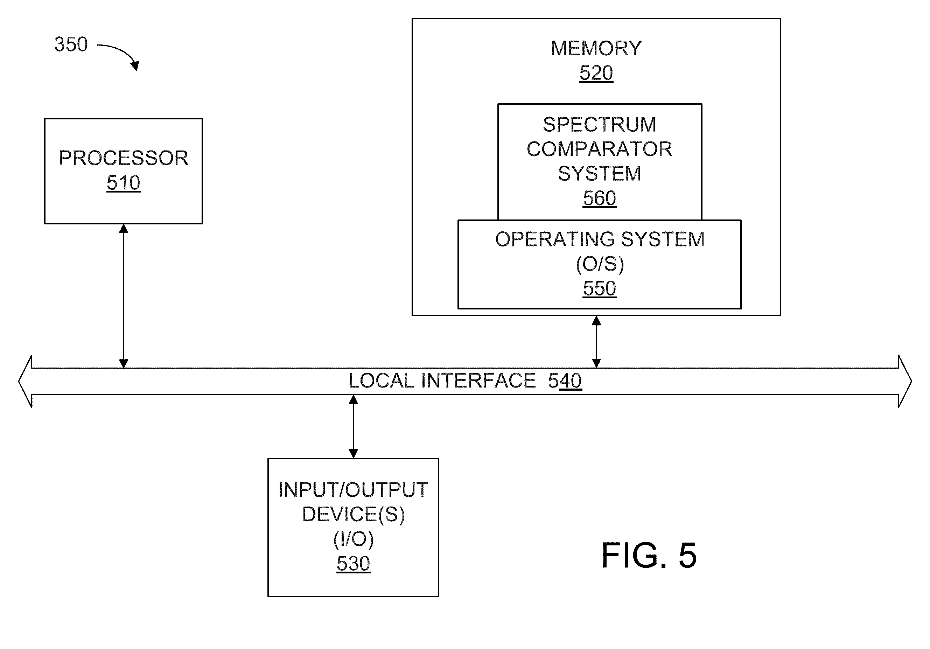

The infrared spectrometer 300 or notification device 350 may include the hardware/software necessary for analyzing, determining and outputting the test result. Spectrums of valid parts may be stored in a memory for subsequent comparison with test subjects. Matches between a valid part spectrum and a test subject spectrum will indicate a valid part and a positive test result. Conversely, if the test subject spectrum does not match (within predetermined tolerances) the valid part spectrum, then a negative test result will be generated. As one example only, the notification device 350 (and/or portions of the infrared spectrometer 300) of the invention can be implemented in software (e.g., firmware), hardware, or a combination thereof. In the currently contemplated best mode, the notification device 350 is at least partially implemented in software, as an executable program, and is executed by a special or general purpose digital computer, such as a personal computer (PC; IBM-compatible, Apple-compatible, or otherwise), laptop, tablet, smartphone, workstation, minicomputer, or mainframe computer. An example of a general purpose computer that can implement the notification device 350 of the present invention is shown in FIG. 5.

Generally, in terms of hardware architecture, as shown in FIG. 5, the notification device 350 includes a processor 510, memory 520, and one or more input and/or output (I/O) devices 530 (or peripherals) that are communicatively coupled via a local interface 540. The local interface 540 can be, for example but not limited to, one or more buses or other wired or wireless connections, as is known in the art. The local interface 540 may have additional elements, which are omitted for simplicity, such as controllers, buffers (caches), drivers, repeaters, and receivers, to enable communications. Further, the local interface may include address, control, and/or data connections to enable appropriate communications among the aforementioned components.

The processor 510 is a hardware device for executing software, particularly that stored in memory 520. The processor 510 can be any custom made or commercially available processor, a central processing unit (CPU), an auxiliary processor among several processors associated with the notification device 350, a semiconductor based microprocessor (in the form of a microchip or chip set), a macroprocessor, or generally any device for executing software instructions. Examples of suitable commercially available microprocessors are as follows: Apple's A7 or A8 chip with 32 or 64-bit architecture, an Atom Z2580 Clover Trail+, an i5 or i7 series microprocessor from Intel Corporation, or an8 core X8 chipset from Motorola Corporation.

The memory 520 can include any one or combination of volatile memory elements (*e.g.,* random access memory (RAM, such as DRAM, SRAM, SDRAM, *etc.*)) and nonvolatile memory elements (*e.g.,* ROM, hard drive, tape, CDROM, *etc.*)*.* Moreover, the memory 520 may incorporate electronic, magnetic, optical, and/or other types of storage media. Note that the memory 520 can have a distributed architecture, where various components are situated remote from one another, but can be accessed by the processor 510.

The software in memory 520 may include one or more separate programs, each of which comprises an ordered listing of executable instructions for implementing logical functions. The software in the memory 520 may include a spectrum comparator system 560 in accordance with the present invention and a suitable operating system (O/S) 550. A nonexhaustive list of examples of suitable commercially available operating systems 550 is as follows: (a) a Windows operating system available from Microsoft Corporation; (b) a Netware operating system available from Novell, Inc.; (c) a Macintosh, iPhone or iPad operating system available from Apple Computer, Inc.; (e) a UNIX operating system, which is available for purchase from many vendors, such as the Hewlett-Packard Company, Sun Microsystems, Inc., and AT&T Corporation; (d) a LINUX operating system, which is freeware that is readily available on the Internet; (e) a run time Vxworks operating system from WindRiver Systems, Inc.; or (f) an appliance-based operating system, such as that implemented in smartphones, tablets, handheld computers or personal data assistants (PDAs). The operating system 550 essentially controls the execution of other computer programs, such as the spectrum comparator system 560, and provides scheduling, input-output control, file and data management, memory management, and communication control and related services. In addition, a graphics processing unit (not shown) resident on a motherboard (not shown) may also be used to implement the spectrum comparator system 560.

The spectrum comparator system 560 is a source program, executable program (object code), script, or any other entity comprising a set of instructions to be performed. When a source program, then the program needs to be translated via a compiler, assembler, interpreter, or the like, which may or may not be included within the memory 520, so as to operate properly in connection with the O/S 550. Furthermore, the spectrum comparator system 560 can be written as (a) an object oriented programming language, which has classes of data and methods, or (b) a procedure programming language, which has routines, subroutines, and/or functions, for example but not limited to, C, C+ +, Pascal, Basic, Fortran, Cobol, Perl, Java, and Ada.

The I/O devices 530 may include input devices, for example but not limited to, a keyboard, mouse, scanner, microphone, camera, infrared imaging device or camera, etc. Furthermore, the I/O devices 530 may also include output devices, for example but not limited to, a printer, a speaker, a display, etc. Finally, the I/O devices 530 may further include devices that communicate both inputs and outputs, for instance but not limited to, a modulator/demodulator (modem; for accessing another device, system, or network), a radio frequency (RF), wifi, Bluetooth or other transceiver, a telephonic interface, a bridge, a router, etc.

If the notification device 350 is a PC, workstation, smartphone, tablet or the like, the software in the memory 520 may further include a basic input output system (BIOS) (omitted for simplicity). The BIOS is a set of essential software routines that initialize and test hardware at startup, start the O/S 550, and support the transfer of data among the hardware devices. The BIOS is stored in ROM so that the BIOS can be executed when the notification device 350 is activated.

When the notification device 350 is in operation, the processor 510 is configured to execute software stored within the memory 520, to communicate data to and from the memory 520, and to generally control operations of the notification device 350 pursuant to the software. The spectrum comparator system 560 and the O/S 550, in whole or in part, but typically the latter, are read by the processor 510, perhaps buffered within the processor 510, and then executed.

When the spectrum comparator system 560 is implemented in software, as is shown in FIG. 5, it should be noted that the spectrum comparator system 560 can be stored on any computer readable medium for use by or in connection with any computer related system or method. In the context of this document, a computer readable medium is an electronic, magnetic, optical, or other physical device or means that can contain or store a computer program for use by or in connection with a computer related system or method. The spectrum comparator system 560 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium. More specific examples (a nonexhaustive list) of the computer-readable medium would include the following: an electrical connection (electronic) having one or more wires, a portable computer diskette (magnetic), a random access memory (RAM) (electronic), a read-only memory (ROM) (electronic), an erasable programmable read-only memory (EPROM, EEPROM, or Flash memory) (electronic), an optical fiber (optical), and a portable compact disc read-only memory (CDROM) (optical). Note that the computer-readable medium could even be paper or another suitable medium upon which the program is printed, as the program can be electronically captured, via for instance optical scanning of the paper or other medium, then compiled, interpreted or otherwise processed in a suitable manner if necessary, and then stored in a computer memory.

In an alternative embodiment, where the spectrum comparator system 560 is implemented in hardware, the spectrum comparator system 560 can implemented with any or a combination of the following technologies, which are each well known in the art: a graphics processing unit, a video card, a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

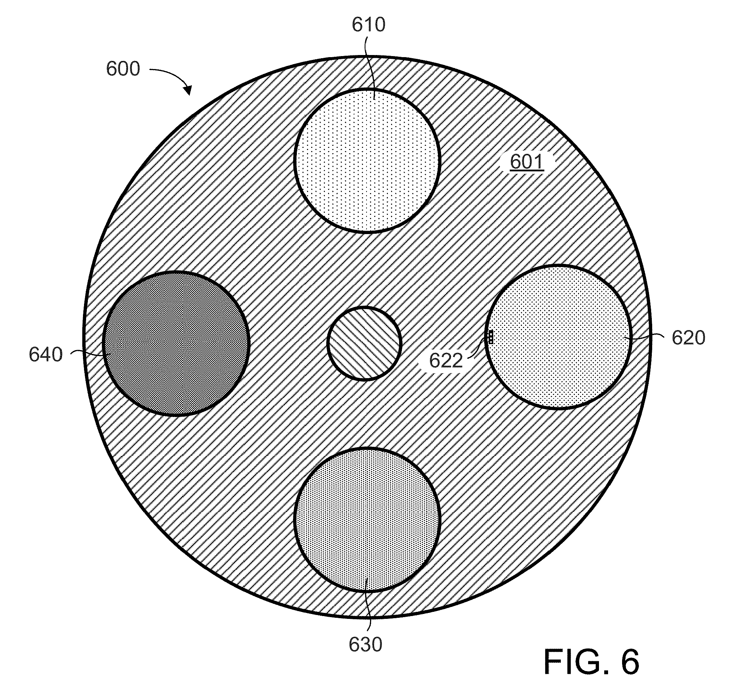

FIG. 6 illustrates an end view of a bandpass filter holder 600, according to an aspect of the present invention. The filter holder 600 includes a main body 601 that is configured to hold a plurality of bandpass filters 610, 620, 630, 640. Each bandpass filter may have a different spectral response. For example, bandpass filter 610 could have a spectral response of about 1,052 cm⁻¹ (9.5 µm) to about 1,250 cm⁻¹ (8 µm), and bandpass filter 620 could have a spectral response of about 1,149 cm⁻¹ (8.7 µm) to about 1,219 cm⁻¹ (8.2 µm), both of which are selected to detect Viton® parts. Further, bandpass filter 630 could have a spectral response of about 1,333 cm⁻¹ (7.5 µm) to about 1,538 cm⁻¹ (6.5 µm), and bandpass filter 640 could have a spectral response of about 1,375 cm⁻¹ (7.3 µm) to about 1,475 cm⁻¹ (6.8 µm), both of which may be selected to detect a G-11 type seal plate. The holder 600 (or carousel) is mounted to the portable infrared spectrometer 300 so that the main body can be rotated and each filter can be interposed into the optical path as desired. Each filter 610, 620, 630, 640 could also include readable identifying indicia 622 that permits the scanner 300 to identify the specific bandpass filter range and display a type of part targeted in the test. For example, the indicia 622 could be placed outside the primary field of view of the filter 620 and comprised of a barcode or other symbol or characters. The scanner 300 would read the indicia 620 (when it was interposed in the optical path) and display the type of target material (e.g., Viton®). In the presently described example of FIG. 6, the two filters 610, 620 are targeted for Viton® and the other two filters 630, 640 are targeted for G-11. However, the filters could each be configured to detect different materials and less than four or more than four filters could be used with a suitably configured holder.

An example using a generator 18 was described, however, any suitable machine may be used with the system and method of the present invention. The machine may be a generator, a pressurized generator, a hydrogen cooled generator, an air cooled generator, a turbine, a steam turbine, a gas turbine, a motor or a compressor.

Where the definition of terms departs from the commonly used meaning of the term, applicant intends to utilize the definitions provided below, unless specifically indicated. The terminology used herein is for the purpose of describing particular embodiments only and is not intended to be limiting of the invention. For example, the above-described embodiments (and/or aspects thereof) may be used in combination with each other. In addition, many modifications may be made to adapt a particular situation or material to the teachings of the invention without departing from its scope. For example, the ordering of steps recited in a method need not be performed in a particular order unless explicitly stated or implicitly required (e.g., one step requires the results or a product of a previous step to be available). Where the definition of terms departs from the commonly used meaning of the term, applicant intends to utilize the definitions provided herein, unless specifically indicated. The singular forms "a", "an" and "the" are intended to include the plural forms as well, unless the context clearly indicates otherwise. It will be understood that, although the terms first, second, etc. may be used to describe various elements, these elements should not be limited by these terms. These terms are only used to distinguish one element from another. The term "and/or" includes any, and all, combinations of one or more of the associated listed items.

This written description uses examples to disclose the invention, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements.

Various aspects and embodiments of the present invention are defined by the following numbered clauses:
1. A system for non-destructively validating a machine part, the machine part configured for use with a dynamoelectric machine or a turbomachine, the system comprising:
   an infrared transceiver configured to emit and receive infrared light;
   a bandpass filter configured to filter the infrared light;
   a crystal probe configured to contact the machine part;
   one or more mirrors configured to direct the infrared light onto the crystal probe and subsequently back to the infrared transceiver; and
   wherein the infrared transceiver is adapted to communicate with a notification device configured to output a notification of a test result.
2. The system of clause 1, wherein the infrared transceiver is a deuterated triglycerine sulfate/potassium bromide (DTGS/KBr) type of transceiver.
3. The system of any preceding clause, wherein the bandpass filter has a spectral response of at least one of:
   about 952 cm⁻¹ (10.5 µm) to about 1,333 cm⁻¹ (7.5 µm);
   about 1,052 cm⁻¹ (9.5 µm) to about 1,250 cm⁻¹ (8 µm);
   about 1,149 cm⁻¹ (8.7 µm) to about 1,219 cm⁻¹ (8.2 µm);
   about 1,333 cm⁻¹ (7.5 µm) to about 1,538 cm⁻¹ (6.5 µm); or
   about 1,375 cm⁻¹ (7.3 µm) to about 1,475 cm⁻¹ (6.8 µm).
4. The system of any preceding clause, wherein the system is configured as hand-held and portable, and wherein the system can be used at or near the dynamoelectric machine or the turbo machine.
5. The system of any preceding clause, wherein the crystal probe comprises one of:
   germanium, diamond, thallium bromoiodide (KRS-5), sodium chloride or zinc selenide.
6. The system of any preceding clause, wherein the notification device at least one of:
   a display, and the test result is indicated on the display; or
   a speaker, and the test result is emitted as an audible tone by the speaker.
7. The system of any preceding clause, wherein the machine part is one of:
   an o-ring, a gasket or a seal plate.
8. The system of any preceding clause, wherein the system comprises:
   a bandpass filter holder, the filter holder configured to hold a plurality of bandpass filters where each bandpass filter has a different spectral response.
9. An on-deck, portable and hand-held system for validating a machine part, the machine part configured for use with a dynamoelectric machine or a turbomachine, the system comprising:
   an infrared transceiver configured to emit and receive infrared light, wherein the infrared transceiver is a deuterated triglycerine sulfate/potassium bromide (DTGS/KBr) type of transceiver;
   a bandpass filter configured to filter the infrared light;
   a crystal probe configured to contact the machine part, wherein the crystal probe comprises one of: germanium, diamond, thallium bromoiodide (KRS-5), sodium chloride or zinc selenide;
   one or more mirrors configured to direct the infrared light onto the crystal probe and subsequently back to the infrared transceiver; and
   wherein the infrared transceiver is adapted to communicate with a notification device configured to output a notification of a test result, and wherein the notification device is a display and the test result is indicated on the display, or the notification device is a speaker and the test result is emitted as an audible tone by the speaker, and wherein the system is configured to perform the validating and provide the test result at or near the dynamoelectric machine or the turbomachine.
10. The system of any preceding clause, wherein the bandpass filter has a spectral response of at least one of:
   about 952 cm⁻¹ (10.5 µm) to about 1,333 cm⁻¹ (7.5 µm);
   about 1,052 cm⁻¹ (9.5 µm) to about 1,250 cm⁻¹ (8 µm);
   about 1,149 cm⁻¹ (8.7 µm) to about 1,219 cm⁻¹ (8.2 µm);
   about 1,333 cm⁻¹ (7.5 µm) to about 1,538 cm⁻¹ (6.5 µm); or
   about 1,375 cm⁻¹ (7.3 µm) to about 1,475 cm⁻¹ (6.8 µm).
11. The system of any preceding clause, further comprising:
   a bandpass filter holder configured to hold a plurality of bandpass filters, each filter having a different spectral response; and
   wherein each filter comprises identifying indicia that identifies a specific bandpass filter range.
12. A method for non-destructively validating a machine part, the machine part configured for use with a dynamoelectric machine or a turbomachine, the method comprising the steps of:
   scanning the machine part with an infrared spectrometer, the infrared spectrometer comprising an infrared transceiver configured to emit and receive infrared light, a crystal probe configured to contact the machine part, and one or more mirrors configured to direct the infrared light onto the crystal probe and subsequently back to the infrared transceiver;
   filtering the infrared light with a bandpass filter;
   comparing a spectrum of the infrared light with a reference spectrum; and outputting a notification of a test result on a notification device.
13. The method of any preceding clause, wherein the method is performed at or near the location of the dynamoelectric machine or the turbomachine.
14. The method of any preceding clause, wherein the machine part is one of:
   an o-ring, a gasket or a seal plate.
15. The method of any preceding clause, wherein the infrared transceiver is a deuterated triglycerine sulfate/potassium bromide (DTGS/KBr) type of transceiver.
16. The method of any preceding clause, wherein the filtering step includes filtering with the bandpass filter having a spectral response between about 952 cm⁻¹ (10.5 µm) to about 1,333 cm⁻¹ (7.5 µm).
17. The method of any preceding clause, wherein the filtering step includes filtering with the bandpass filter having a spectral response between about 1,052 cm⁻¹ (9.5 µm) to about 1,250 cm⁻¹ (8 µm), or about 1,149 cm⁻¹ (8.7 µm) to about 1,219 cm⁻¹ (8.2 µm).
18. The method of any preceding clause, wherein the filtering step includes filtering with the bandpass filter having a spectral response between about 1,333 cm⁻¹ (7.5 µm) to about 1,538 cm⁻¹ (6.5 µm), or about 1,375 cm⁻¹ (7.3 µm) to about 1,475 cm⁻¹ (6.8 µm).
19. The method of any preceding clause, wherein the crystal probe comprises one of:
   germanium, diamond, thallium bromoiodide (KRS-5), sodium chloride or zinc selenide.
20. The method of any preceding clause, wherein the notification device is at least one of:
   a display, and the test result is indicated on the display; or
   a speaker, and the test result is emitted as an audible tone by the speaker.

## Claims

1. A system for non-destructively validating a machine part, the machine part configured for use with a dynamoelectric machine or a turbomachine, the system comprising:
an infrared transceiver configured to emit and receive infrared light;
a bandpass filter configured to filter the infrared light;
a crystal probe configured to contact the machine part;
one or more mirrors configured to direct the infrared light onto the crystal probe and subsequently back to the infrared transceiver; and
wherein the infrared transceiver is adapted to communicate with a notification device configured to output a notification of a test result.

2. The system of claim 1, wherein the infrared transceiver is a deuterated triglycerine sulfate/potassium bromide (DTGS/KBr) type of transceiver.

3. The system of claim 1 or .2, wherein the bandpass filter has a spectral response of at least one of:
about 952 cm⁻¹ (10.5 µm) to about 1,333 cm⁻¹ (7.5 µm);
about 1,052 cm⁻¹ (9.5 µm) to about 1,250 cm⁻¹ (8 µm);
about 1,149 cm⁻¹ (8.7 µm) to about 1,219 cm⁻¹ (8.2 µm);
about 1,333 cm⁻¹ (7.5 µm) to about 1,538 cm⁻¹ (6.5 µm); or
about 1,375 cm⁻¹ (7.3 µm) to about 1,475 cm⁻¹ (6.8 µm).

4. The system of claim 1, 2 or 3, wherein the system is configured as hand-held and portable, and wherein the system can be used at or near the dynamoelectric machine or the turbomachine.

5. The system of any preceding claim, wherein the crystal probe comprises one of:
germanium, diamond, thallium bromoiodide (KRS-5), sodium chloride or zinc selenide.

6. The system of any preceding claim, wherein the notification device at least one of:
a display, and the test result is indicated on the display; or
a speaker, and the test result is emitted as an audible tone by the speaker.

7. The system of any preceding claim, wherein the machine part is one of:
an o-ring, a gasket or a seal plate.

8. The system of any preceding claim, wherein the system comprises:
a bandpass filter holder, the filter holder configured to hold a plurality of bandpass filters where each bandpass filter has a different spectral response.

9. An on-deck, portable and hand-held system for validating a machine part, the machine part configured for use with a dynamoelectric machine or a turbomachine, the system comprising:
an infrared transceiver configured to emit and receive infrared light, wherein the infrared transceiver is a deuterated triglycerine sulfate/potassium bromide (DTGS/KBr) type of transceiver;
a bandpass filter configured to filter the infrared light;
a crystal probe configured to contact the machine part, wherein the crystal probe comprises one of: germanium, diamond, thallium bromoiodide (KRS-5), sodium chloride or zinc selenide;
one or more mirrors configured to direct the infrared light onto the crystal probe and subsequently back to the infrared transceiver; and
wherein the infrared transceiver is adapted to communicate with a notification device configured to output a notification of a test result, and wherein the notification device is a display and the test result is indicated on the display, or the notification device is a speaker and the test result is emitted as an audible tone by the speaker, and wherein the system is configured to perform the validating and provide the test result at or near the dynamoelectric machine or the turbomachine.

10. A method for non-destructively validating a machine part, the machine part configured for use with a dynamoelectric machine or a turbomachine, the method comprising the steps of:
scanning the machine part with an infrared spectrometer, the infrared spectrometer comprising an infrared transceiver configured to emit and receive infrared light, a crystal probe configured to contact the machine part, and one or more mirrors configured to direct the infrared light onto the crystal probe and subsequently back to the infrared transceiver;
filtering the infrared light with a bandpass filter;
comparing a spectrum of the infrared light with a reference spectrum; and
outputting a notification of a test result on a notification device.

11. The method of claim 10, wherein the method is performed at or near the location of the dynamoelectric machine or the turbomachine.

12. The method of claim 11, wherein the machine part is one of:
an o-ring, a gasket or a seal plate.

13. The method of claim 10, 11 or 12, wherein the filtering step includes filtering with the bandpass filter having a spectral response between about 952 cm⁻¹ (10.5 µm) to about 1,333 cm⁻¹ (7.5 µm).

14. The method of claim 10, 11 or 12, wherein the filtering step includes filtering with the bandpass filter having a spectral response between about 1,052 cm⁻¹ (9.5 µm) to about 1,250 cm⁻¹ (8 µm), or about 1,149 cm⁻¹ (8.7 µm) to about 1,219 cm⁻¹ (8.2 µm).

15. The method of claim 10, 11 or 12, wherein the filtering step includes filtering with the bandpass filter having a spectral response between about 1,333 cm⁻¹ (7.5 µm) to about 1,538 cm⁻¹ (6.5 µm), or about 1,375 cm⁻¹ (7.3 µm) to about 1,475 cm⁻¹ (6.8 µm).
